# EUROPÄISCHE PATENTSCHRIFT

(11) **EP 2 182 225 B1**
(45) Veröffentlichungstag und Bekanntmachung des Hinweises auf die Patenterteilung: **06.06.2018**
(21) Anmeldenummer: 09172383.3
(22) Anmeldetag: 07.10.2009
(51) Int. Cl.: F16B 19/14, F16B 35/04, F16B 37/06, F16B 43/00, F16B 33/06, F16B 19/08, F16B 33/00

(54) **Gewindebolzen**
Stud bolts
Boulons filetés

(30) Priorität: 04.11.2008 DE 102008043435
(43) Veröffentlichungstag der Anmeldung: 05.05.2010
(73) Patentinhaber: HILTI Aktiengesellschaft, 9494 Schaan (LI)
(72) Erfinder: Buhri, Reinhard, 6820, Frastanz (AT); Bönig, Stefan, 88147, Achberg-Esseratsweiler (DE)
(74) Vertreter: Hilti Aktiengesellschaft Corporate Intellectual Property

(56) Entgegenhaltungen:
- EP-A1- 0 756 093
- DE-A1- 2 312 942
- DE-A1-102004 039 300
- DE-U1- 20 209 675
- US-A1- 2005 225 086

## Beschreibung

### Gewindebolzen

Die vorliegende Erfindung betrifft einen Gewindebolzen der im Oberbegriff von Patentanspruch 1 genannten Art. Ein derartiger Gewindebolzen ist aus der DE 10 2004 039 300 A1 bekannt.

Aus der DE20209675U ist ein weiterer Gewindebolzen mit einem Kopf, einem ein Aussengewinde tragenden Lastangriffsabschnitt und einem Befestigungsabschnitt bekannt. Der Gewindebolzen besteht aus rostfreiem Edelstahl wodurch seine Herstellung aufwändig und kostenintensiv ist.

Die Aufgabe der vorliegenden Erfindung liegt darin, einen kostengünstig herstellbaren Gewindebolzen bereitzustellen, der wie der bekannte Gewindebolzen problemlos mit einem handgeführten Setzgerät in ein Werkstück eintreibbar ist.

Diese Aufgabe wird erfindungsgemäss durch die in Patentanspruch 1 genannten Massnahmen gelöst. Demnach weist der Lastangriffsabschnitt einen stiftförmigen Kernbereich auf, der einteilig mit dem Befestigungsabschnitt und dem Kopf ausgebildet ist, wobei der Kernbereich, der Befestigungsabschnitt und der Kopf aus einem Metall bestehen und wobei radial aussen an dem Kernbereich eine das Gewinde tragende Gewindehülse aus einem Kunststoffmaterial festgelegt ist, welche in Längsrichtung des Gewindebolzens von dem Kopf überragt wird. Hierdurch können die Herstellkosten deutlich gesenkt werden, wobei die Robustheit des Gewindebolzens beibehalten wird. Bei Verwendung des Gewindebolzens in einem handgeführten Setzgerät, wie z. B. einem brennkraftbetriebenen Setzgerät mit hohen Setzenergien grösser 80 Joule, wird die Setzenergie auf den Kopf des Gewindebolzens eingeleitet und von diesem über den Kernbereich direkt in den Befestigungsabschnitt geleitet, ohne dass Setzenergie auf die Gewindehülse abgeleitet wird. Vorteilhaft ist die Gewindehülse auf den Kernbereich aufgespritzt, wodurch der Monatageaufwand im Vergleich zu einer aufgesteckten Gewindehülse vermindert wird und damit die Herstellkosten reduziert werden.

Von Vorteil ist es ferner, wenn der Kernbereich Mittel zur drehfesten Fixierung der Gewindehülse aufweist, so dass Muttern auf das Gewinde aufgeschraubt werden können ohne dass die Gefahr besteht, dass sich die Gewindehülse auf dem Kernbereich dreht. Die Mittel können dabei z. B. als Vorsprünge, Noppen, Vertiefungen oder ähnliches ausgebildet sein.

In einer besonders vorteilhaften Ausgestaltung ist die Gewindehülse aus GFK (Glasfaserverstärkter Kunststoff) gefertigt. Auf Grund der hohen Festigkeit von GFK können mit dem erfindungsgemässen Gewindebolzen hohe Haltewerte erreicht werden.

Weiterhin von Vorteil ist es, wenn der Kernbereich, der Befestigungsabschnitt und der Kopf aus rostfreiem Edelstahl bestehen, so dass eine gute Korrosionsbeständigkeit gewährleistet ist.

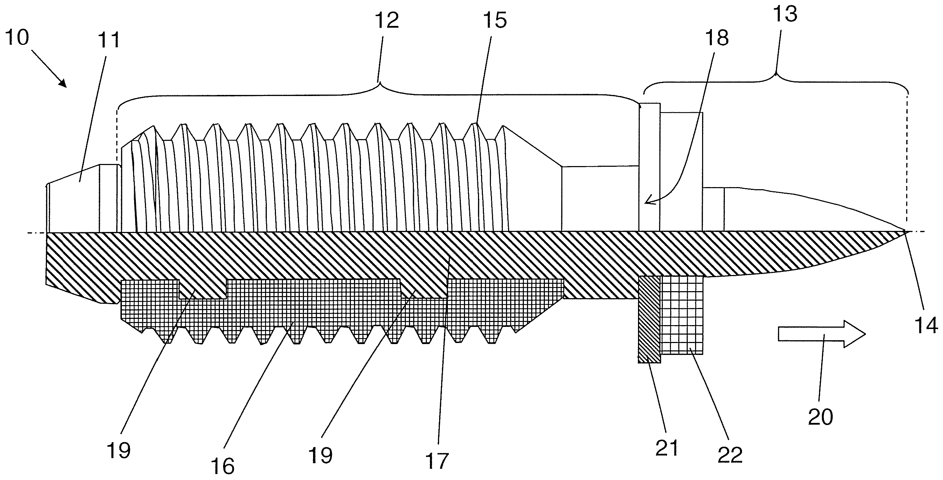

In der Zeichnung ist die Erfindung in einem Ausführungsbeispiel dargestellt, die einen erfindungsgemässen Gewindebolzen 10 zur Hälfte im Längsschnitt zeigt.

Der Gewindebolzen 10 weist einen Lastangriffsabschnitt 12 auf, der ein Gewinde 15 trägt, das an einer aus Kunststoff gefertigten Gewindehülse 16 ausgebildet ist. Die Gewindehülse 16 ist dabei auf einem stiftförmigen Kernbereich 17 des Lastangriffsabschnitts 12 drehfest angeordnet. Die Gewindehülse 16 ist z. B. aus GFK (Glasfaserverstärkter Kunststoff) und wurde im Kunststoffspritzgussverfahren um den Kernbereich 17 herum gespritzt. Um die drehfeste Sicherung der Gewindehülse 16 sicherzustellen, ragen von dem Kernbereich 17 in radialer Richtung als Vorsprünge ausgebildete Mittel 19 zur drehfesten Fixierung der Gewindehülse 16 ab, die ein Lösen der stoffschlüssigen Verbindung zwischen der Gewindehülse 16 und dem Kernbereich 17 durch Formschluss mit dem umgebenden Hülsenmaterial verhindern.

An den Lastangriffsabschnitt 12, schliesst sich in Setzrichtung 20 ein Befestigungsabschnitt 13 an, an dessen freien Ende eine Spitze 14 angeformt ist. Anstelle einer Spitze könnte aber auch ein flaches, abgeflachtes oder rundliches Ende vorgesehen sein. An seinem der Spitze 14 abgewandten Ende, welches benachbart ist zum Lastangriffsabschnitt 12 ist ein Kopf 11 an dem Gewindebolzen 10 ausgeformt. Der Kopf 11 überragt dabei den Lastangriffsabschnitt 13 und insbesondere die Gewindehülse 16 in axialer bzw. in Längsrichtung des Gewindebolzens 10, so dass keine Setzenergie vom Setzkolben eines Setzgeräts direkt auf die Gewindehülse 16 geführt wird.

Der Kernbereich 17 des Lastangriffsabschnitts 12, der Befestigungsabschnitt 13 und der Kopf 14 sind aus einem harten und korrosionsbeständigen Metall, insbesondere aus einem rostfreien Edelstahl gefertigt.

Auf den Befestigungsabschnitt 13 ist eine Versteifungsscheibe 21 in Form einer gelochten Metallscheibe aufgesteckt oder aufgepresst, an die sich in Setzrichtung 20 ein ringscheibenförmiges Dichtungselement 22 aus Kunststoff, wie z. B. eine Dichtscheibe aus Neopren, anschliesst. Die Versteifungsscheibe 21 ist in diesem Ausführungsbeispiel in Setzrichtung konisch gewölbt, um die Vorspannung des Dichtungselements 22 nach erfolgter Setzung zu verbessern. Wird das Befestigungselement 10 in ein Werkstück eingetrieben, so wird das Dichtungselement 22 über die Versteifungsscheibe 21, die von einem umlaufenden Anschlag 18 zwischen dem Lastangriffsabschnitt 12 und dem Befestigungsabschnitt 13 mitgenommen wird, gegen das Werkstück gepresst und derart die Kontaktzone gegen den Zutritt von Medien jeglicher Art abgedichtet.

## Patentansprüche

1. Gewindebolzen mit einem Befestigungsabschnitt (13), mit einem Lastangriffsabschnitt (12), an dem ein Gewinde (15) angeordnet ist, und mit einem Kopf (11), wobei der Lastangriffsabschnitt (12) einen stiftförmigen Kernbereich (17) aufweist, der einteilig mit dem Befestigungsabschnitt (13) und dem Kopf (11) ausgebildet ist, wobei der Kernbereich (17), der Befestigungsabschnitt (13) und der Kopf (11) aus einem Metall bestehen, **dadurch gekennzeichnet, dass** radial aussen an dem Kernbereich (17) eine das Gewinde (15) tragende Gewindehülse (16) aus einem Kunststoffmaterial festgelegt ist, welche in Längsrichtung des Gewindebolzens (10) von dem Kopf (11) überragt wird.

2. Gewindebolzen, nach Anspruch 1, **dadurch gekennzeichnet, dass** die Gewindehülse (16) auf den Kernbereich (17) aufgespritzt ist.

3. Gewindebolzen, nach Anspruch 1 oder 2, **dadurch gekennzeichnet, dass** der Kernbereich (17) Mittel (19) zur drehfesten Fixierung der Gewindehülse (16) aufweist.

4. Gewindebolzen, nach einem der Ansprüche 1 bis 3, **dadurch gekennzeichnet, dass** die Gewindehülse (16) aus glasfaserverstärktem Kunststoff besteht.

5. Gewindebolzen, nach einem der Ansprüche 1 bis 4, **dadurch gekennzeichnet, dass** der Kernbereich (17), der Befestigungsabschnitt (13) und der Kopf (11) aus rostfreiem Edelstahl bestehen.

## Claims

1. Threaded stud, comprising a fastening section (13), a load application section (12) on which a thread (15) is arranged, and a head (11), the load application section (12) having a shaft-like core region (17) which is formed integrally with the fastening section (13) and the head (11), and the core region (17), the fastening section (13) and the head (11) being made from a metal, **characterised in that** a threaded sleeve (16) carrying the thread (15) and made of a plastics material is fixed to the radially outer side of the core region (17), with the head (11) projecting above said threaded sleeve (16) in the longitudinal direction of the threaded stud (10).

2. Threaded stud according to Claim 1, **characterised in that** the threaded sleeve (16) is injection-moulded on to the core region (17).

3. Threaded stud according to Claim 1 or 2, **characterised in that** the core region (17) has means (19) for non-rotatably fixing the threaded sleeve (16).

4. Threaded stud according to any one of claims 1 to 3, **characterised in that** the threaded sleeve (16) is made of glassfibre-reinforced plastic.

5. Threaded stud according to any one of claims 1 to 4, **characterised in that** the core region (17), the fastening section (13) and the head (11) are made of special stainless steel.

## Revendications

1. Boulon fileté comportant une partie de fixation (13), une partie d'application de charge (12) sur laquelle est disposé un filetage, et une tête (11), dans lequel la partie d'application de charge (12) comporte une zone centrale (17) en forme de goupille qui est formée d'un seul tenant avec la partie de fixation (13) et la tête (11), dans lequel la zone centrale (17), la partie de fixation (13) et la tête (11) sont constituées d'un métal, **caractérisé en ce qu'**une douille filetée (16) en matière plastique portant le filetage (15) est fixée radialement à l'extérieur sur la zone centrale (17), laquelle tête (11) fait saillie à partir de la douille filetée dans une direction longitudinale du boulon fileté (10) .

2. Boulon fileté selon la revendication 1, **caractérisé en ce que** la douille filetée (16) est moulée par injection sur la zone centrale (17).

3. Boulon fileté selon la revendication 1 ou 2, **caractérisé en ce que** la zone centrale (17) comporte des moyens (19) pour fixer la douille filetée (16) de manière bloquée en rotation.

4. Boulon fileté selon l'une des revendications 1 à 3, **caractérisé en ce que** la douille filetée (16) est constituée d'une matière plastique renforcée par des fibres de verre.

5. Boulon fileté selon l'une des revendications 1 à 4, **caractérisé en ce que** la zone centrale (17), la partie de fixation (13) et la tête (11) sont constituées d'un acier inoxydable.
